**Europäisches Patentamt**

**European Patent Office**

**Office européen des brevets**

(11) Veröffentlichungsnummer: **0 330 751**

**A2**

(12) # EUROPÄISCHE PATENTANMELDUNG

(21) Anmeldenummer: **88120810.2**

(51) Int. Cl.⁴: **C01B 3/38**

(22) Anmeldetag: **13.12.88**

(30) Priorität: **29.02.88 DE 3806408**

(43) Veröffentlichungstag der Anmeldung:
**06.09.89 Patentblatt 89/36**

(84) Benannte Vertragsstaaten:
**BE DE ES FR IT NL**

(71) Anmelder: **Uhde GmbH**
**Friedrich-Uhde-Strasse 15**
**D-4600 Dortmund 1(DE)**

(72) Erfinder: **Herbort, Hans-Joachim, Dipl-Ing.**
**Unnaer Strasse 65b**
**D-5758 Fröndenberg(DE)**
Erfinder: **Ilgner, Hartmut, Dipl-Ing.**
**Am Siepenhohl 14**
**D-4600 Dortmund 30(DE)**
Erfinder: **Thiagarajan, Natarajan, Dr. Dipl.-Ing.**
**Bömckestrasse 25**
**D-4600 Dortmund 1(DE)**
Erfinder: **Severin, Manfred, Dipl.-ing.**
**Am Wiesenberge 23**
**D-5840 Schwerte(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) **Verfahren und Vorrichtung zur Erzeugung eines H2 und C0-enthaltenden Synthesegases.**

(57) Mit einem Verfahren bzw. einer Vorrichtung zur Erzeugung eines H₂ und CO enthaltenden Synthesegases, mittels schrittweiser, katalytischer partieller Oxidation unter Verwendung eines Kohlenwasserstoff-haltigen Einsatzgases, wobei das Oxidationsmittel über die Gesamtlänge der katalytischen partiellen Oxidation in Teilmengen dem zu behandelnden Gas zugesetzt wird, soll im Sinne der Sauerstoffeinsparung eine entsprechende Verfahrensführung bzw. eine entsprechende Vorrichtung geschaffen werden.

Dies wird dadurch erreicht, daß die fühlbare Wärme des die katalytische Behandlung verlassenden Gases wenigstens teilweise dem die Behandlung durchlaufenden Gase zugeführt wird.

## Verfahren und Vorrichtung zur Erzeugung eines H₂ und CO-enthaltenden Synthesegases

Die Erfindung richtet sich auf ein Verfahren und eine Vorrichtung zur Erzeugung eines $H_2$ und CO enthaltenden Synthesegases, mittels schrittweiser, katalytischer partieller Oxidation unter Verwendung eines Kohlenwasserstoff-haltigen Einsatzgases, wobei das Oxidationsmittel über die Gesamtlänge der katalytischen partiellen Oxidation in Teilmengen dem zu behandelnden Gas zugesetzt wird.

Eine schrittweise partielle Oxidation ist z.B. aus der EP-B-0 155 867 bekannt. Dabei werden bei dem bekannten Verfahren eine Reihe von getrennten Katalysatorbetten durchlaufen, wobei dort am Eingang aufeinanderfolgende Katalysatorbetten abwechselnd eine Fraktion der Kohlenwasserstoffcharge oder eine Fraktion des Sauerstoffbedarfes zugeführt wird.

Bei derartigen Verfahren liegt ein wesentlicher wirtschaftlicher Vorteil in der Menge des einzusetzenden Sauerstoffes. Je geringer diese Menge ist, desto wirtschaftlicher läßt sich in der Regel ein derartiges Verfahren betreiben. Es hat sich gezeigt, daß durch vergleichsweise einfache Verfahrensführung der Sauerstoffbedarf stark gemindert werden kann. Es ist daher Aufgabe der Erfindung im Sinne der Sauerstoffeinsparung, eine entsprechende Verfahrensführung bzw. eine entsprechende Vorrichtung zu schaffen.

Diese Aufgabe wird gemäß der Erfindung dadurch gelöst, daß die fühlbare Wärme des die katalytische Behandlung verlassenden Gases wenigstens teilweise dem die Behandlung durchlaufenden Gase zugeführt wird. ˙

Die Nutzung der fühlbaren beim Prozeß entstehenden Wärme zur Vorwärmung des Einsatzgases bzw. zur Erwärmung der einzelnen Teilstufen bedingt, daß der Sauerstoffbedarf stark reduziert werden kann, ohne daß sich dadurch die Verfahrensführung verschlechterte. Auch besteht keine Gefahr der extremen Temperaturerhöhung in einzelnen Teilbereichen durch ein Zünden größerer Gemischanteile. Dies wird durch die Erfindung vermieden.

In Ausgestaltung ist vorgesehen, daß die katalytischen Oxidationsstufen von Wärmeaustauscherzonen auf Abstand zueinander gehalten werden.

Die Erfindung sieht auch vor, daß die Zufuhr des Oxidationsmittels nur in den katalytischen Oxidationsstufen erfolgt.

Gilt die Zufuhr des Oxidationsmittel in bestimmten Stufen als besonders zweckmäßig, so gilt dies in gleicher Weise auch für den Bereich des Wärmetausches. Die Erfindung sieht daher vor, daß der Wärmetausch im Bereich der Wärmeaustauscherzonen und auch wenigstens teilweise im Bereich der Katalysatorzonen durchgeführt wird, falls dies für die Verfahrensführung zweckmäßig ist.

Eine weitere Ausgestaltung der erfindungsgemäßen Verfahrensweise besteht darin, daß in den Wärmeaustauscherzonen auf der Seite des teilreagierten Gases gleichzeitig und zusätzlich zum Wärmeaustausch eine teilweise Dampfreformierungsreaktion des jeweiligen Restmethans im Gas an entsprechendem Katalysator, z.B. Ni-Katalysator, durchgeführt wird.

Es kann auch vorgesehen sein, daß in den Wärmeaustauscherzonen das zu reagierende Gas durch Einbauten, wie Leitbleche oder dgl., in eine vorbestimmte Strömungsverteilung über den Querschnitt des Katalysators geleitet wird, wobei derartige Leiteinrichtungen gleichzeitig eine Wärmeübertragungsfunktion als Wärmeaustauscherelemente oder dgl. übernehmen können.

Vorteilhaft ist es, wenn nach der letzten katalytischen partiellen Oxidation eine katalytische Dampfreformierung oder eine nicht-katalytische partielle Oxidation durchgeführt wird, wie dies in Abwandlung die Erfindung ebenfalls vorsieht.

Vorteilhaft kann es auch sein, wenn ein Teil des Dampfes dem sauerstofführenden Gas bzw. dem Oxidationsmittel beigemischt wird.

Vorgesehen sein kann auch, daß $CO_2$ wenigstens einem der eintretenden Ströme des Prozesses zugemischt wird, wobei in darüber hinausgehender Ausgestaltung vorgesehen sein kann, daß ein Teil des Einsatzgases der Zone der nicht-katalytischen Oxidation zugeführt wird, soweit eine derartige Zone vorgesehen ist.

Die Erfindung sieht auch eine Vorrichtung zur Lösung der eingangs bezeichneten Aufgabe vor, die sich erfindungsgemäß dadurch auszeichnet, daß die Katalysatorzonen in einzelne Segmente aufgeteilt sind und Leitzonen für das reformierte Gas, die es im wesentlichen im Gegenstrom zu den Katalysatorzonen führen, vorgesehen sind.

Die Vorteile der erfindungsgemäßen Verfahrensweise gelten hier ebenso für die Vorrichtung zur Durchführung des Verfahrens.

In Ausgestaltung ist vorgesehen, daß die Segmente der Katalysatorzonen in Strömungsrichtung des zu behandelnden Gases auf Abstand zueinander gehalten und mit Einrichtungen versehen sind, um in diesen Katalysatorzonen ein Oxida tionsmittel in kleinen Mengen dem Gasstrom zuzuführen.

Spezielle Ausgestaltungen der Vorrichtung bestehen darin, daß die einzelnen Katalysatorzonen durch Wärmeaustauscherzonen auf Abstand zueinander gehalten sind und/oder daß innerhalb der Katalysatorzonen Zuführlanzen für das Oxidationsmittel mit Mikroporen, wie Laserbohrungen oder dgl., vorgesehen sind und/oder jede Katalysatorzone getrennt mit der Zufuhr eines Oxidationsmittels beaufschlagbar ist.

Die Zufuhr des Oxidationsmittels in kleinen Mengen ist für die Prozeßsteuerung von besonderer Wichtigkeit, wie dies eingangs bereits ausgeführt wurde, insbesondere um überhöhte Temperaturen zu vermeiden und um einen möglichst geringen Sauerstoffverbrauch zu gewährleisten.

Die Erfindung sieht auch vor, daß in den Wärmeaustauscherzonen Schikanen oder dgl. für das durchströmende Gas zu dessen gezielter Strömungsleitung vorgesehen sind, wobei an dieser Stelle bemerkt sei, daß diese Schikanen nicht nur für das die Wärmeaustauscherzone durchströmende Gas vorgesehen sind, sondern in gleicher Weise für das verfügbare wärmeabgebende, bereits reagierte Gas.

Zweckmäßig kann es sein, wenn die Zuführrohre für das Oxidationsmittel aus einem porösen keramischen Material oder einem entsprechenden Sonderwerkstoff gefertigt sind, wie dies die Erfindung ebenfalls vorsieht. Die Zuführrohre können wenigstens teilweise katalytisch oxidierende Eigenschaften aufweisen, durch katalytische Beschichtung der Außenhaut.

Darüber hinaus kann es sinnvoll sein, die Wärmeübertragungszonen mit einem Inertmaterial zur Wärmeübertragung zu füllen und/oder nach dem in Strömungsrichtung letzten katalytischen Segment für eine Teilmenge $O_2$-enthaltenden Gases in den Zuführlanzen eine Öffnung vorzusehen.

Diese Maßnahme kann besonders zweckmäßig sein, um eine direkte nicht katalytische partielle Oxidation am Ende der gesamten partiellen Oxidation vorzusehen, um auch im Bereich der letzten katalytischen Oxidation eine Temperaturdifferenzierung zwischen reagiertem abströmenden Gas auf der Mantelseite und reagierendem Gas auf der Rohrseite zu ermöglichen.

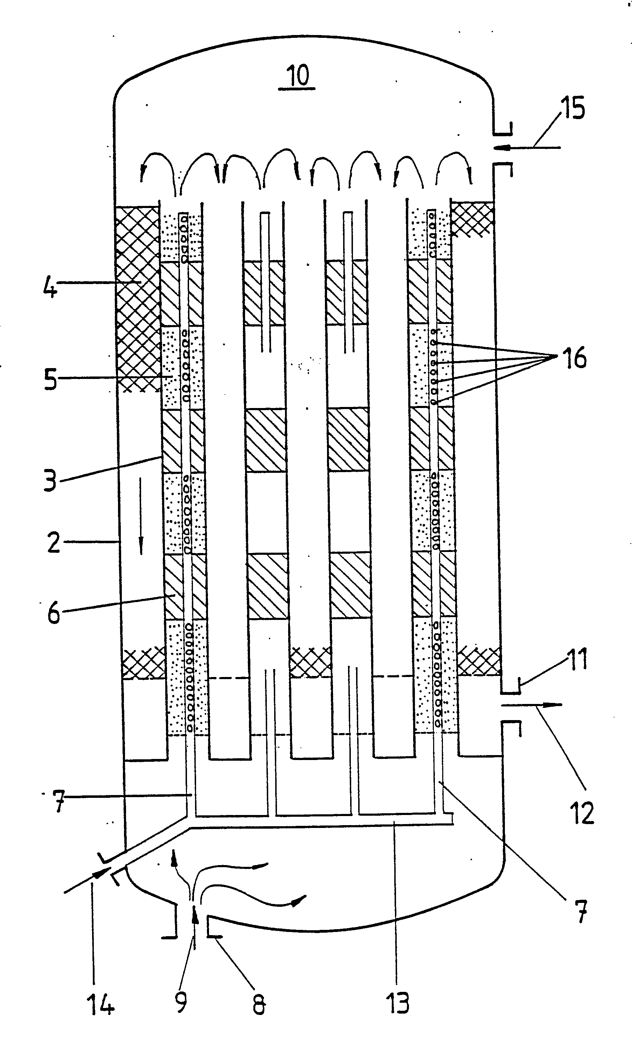

Die Erfindung ist nachstehend anhand der Zeichnung beispielsweise näher erläutert, diese zeigt in der einzigen Figur ein Prinzipbild einer Vorrichtung nach der Erfindung.

Die allgemein mit 1 bezeichnete Vorrichtung weist in einem Gehäuse 2 eine Mehrzahl von Rohren 3 auf, die von einer porösen Schüttung 4 umgeben sind.

Die Rohre 3 sind segmentweise mit einer Katalysatorfüllung 5 und Wärmeaustauschern 6 beaufschlagt und sind zentrisch von Rohrlanzen 7 durchsetzt, die eine Mehrzahl von Poren 16 aufweisen, die in der Figur lediglich angedeutet sind.

Die Vorrichtung 1 wird über einen Stutzen 8 mit zu behandelndem Gas gefüllt, was durch den Pfeil 9 angedeudet ist. Dieses Gas durchströmt nacheinander die Katalysatorsegmente 5 und die Wärmeaustauscherbereiche 6 und strömt oben fertig behandelt in einen Dom 10 und von dort durch die Wärmeaustauscherschüttungen 4 zu einem Rohrstutzen 11 und verläßt die Vorrichtung 1 zur weiteren Behandlung, was mit dem Pfeil 12 angedeutet ist.

Über ein Verteilersystem 13 werden die einzelnen Sauerstoffzufuhrlanzen 7 mit einem Sauerstoffhaltigen Medium beaufschlagt, z.B. $O_2$ oder ein anderes Oxidationsmittel, was in der Figur durch den Pfeil 14 angedeutet ist. Im Bereich des Domes 10 können weitere gasförmige Substanzen dem Prozeß zugeführt werden, was durch einen Pfeil 15 angedeutet ist.

Erkennbar kann das Gas nach der katalytischen Behandlung im Gegenstrom in den Wärmeaustauschern 4 seine Wärme abgeben, und zwar sei es ausschließlich in den katalytischen Bereichen 5 oder ausschließlich in den Wärmeaustauscherzo nen 6 oder sowohl als auch in diesen Bereichen, dies ist nicht näher dargestellt. Das Oxidationsmittel wird stufenweise zugeführt.

## Ansprüche

1. Verfahren zur Erzeugung eines $H_2$ und CO enthaltenden Synthesegases, mittels schrittweiser, katalytischer partieller Oxidation unter Verwendung eines Kohlenwasserstoff-haltigen Einsatzgases, wobei das Oxidationsmittel über die Gesamtlänge der katalytischen partiellen Oxidation in Teilmengen dem zu behandelnden Gas zugesetzt wird,
dadurch gekennzeichnet,
daß die fühlbare Wärme des die katalytische Behandlung verlassenden Gases wenigstens teilweise dem die Behandlung durchlaufenden Gase zugeführt wird.

2. Verfahren nach Anspruch 1,
dadurch gekennzeichnet,
daß die katalytischen Oxidationsstufen von Wärmeaustauscherzonen auf Abstand zueinander gehalten werden.

3. Verfahren nach Anspruch 1 oder 2,
dadurch gekennzeichnet,
daß die Zufuhr des Oxidationsmittels nur in den katalytischen Oxidationsstufen erfolgt.

4. Verfahren nach einem der Ansprüche 1 bis 3,
dadurch gekennzeichnet,
daß der Wärmetausch zwischen reagiertem und teilreagiertem Gas im Bereich der Wärmeaustauscherzonen und wenigstens teilweise im Bereich der Katalysatorzonen durchgeführt wird.

5. Verfahren nach einem der Ansprüche 1 bis 4,
dadurch gekennzeichnet,
daß in den Wärmeaustauscherzonen auf der Seite des teilreagierten Gases gleichzeitig und zusätzlich zum Wärmeaustausch eine teilweise Dampfreformierungsreaktion des jeweiligen Restmethans im Gas an Katalysator durchgeführt wird.

6. Verfahren nach einem der vorangehenden Ansprüche,
dadurch gekennzeichnet,
daß in den Wärmeaustauscherzonen das zu reagierende Gas durch Einbauten, wie Leitbleche oder dgl., in eine vorbestimmte Strömungsverteilung über den Querschnitt des Katalysators geleitet wird.

7. Verfahren nach einem der vorangehenden Ansprüche,
dadurch gekennzeichnet,
daß nach der letzten katalytischen partiellen Oxidation eine katalytische Dampfreformierung durchgeführt wird.

8. Verfahren nach einem der vorangehenden Ansprüche,
dadurch gekennzeichnet,
daß nach der letzten katalytischen partiellen Oxidation eine nicht-katalytische partielle Oxidation durchgeführt wird.

9. Verfahren nach einem der vorangehenden Ansprüche,
dadurch gekennzeichnet,
daß ein Teil des Dampfes dem sauerstoffführenden Gas beigemischt wird.

10. Verfahren nach einem der vorangehenden Ansprüche,
dadurch gekennzeichnet,
daß $CO_2$ wenigstens einem der eintretenden Ströme zugemischt wird.

11. Verfahren nach einem der vorangehenden Ansprüche,
dadurch gekennzeichnet,
daß ein Teil des Einsatzgases der Zone der nicht-katalytischen Oxidation zugeführt wird.

12. Vorrichtung, insbesondere zur Durchführung des Verfahrens nach einem der vorangehenden Ansprüche, zur Herstellung eines Synthesegases durch katalytisch partielle Oxidation, wobei das Oxidationsmittel schrittweise zugegeben wird,
dadurch gekennzeichnet,
daß die Katalysatorzonen (5) in einzelne Segmente aufgeteilt sind und Leitzonen für das reformierte Gas, die im wesentlichen im Gegenstrom zu den Katalysatorzonen (5) führen, vorgesehen sind.

13. Vorrichtung nach Anspruch 12,
dadurch gekennzeichnet,
daß die Segmente der Katalysatorzonen (5) in Strömungsrichtung des zu behandelnden Gases auf Abstand zueinander gehalten und mit Einrichtungen (7) versehen sind, um in diesen Katalysatorzonen ein Oxidationsmittel in kleinen Mengen dem Gasstrom zuzuführen.

14. Vorrichtung nach einem der vorangehenden Ansprüche,
dadurch gekennzeichnet,
daß die einzelnen Katalysatorzonen (5) durch Wärmeaustauscherzonen (6) auf Abstand zueinander gehalten sind.

15. Vorrichtung nach einem der vorangehenden Ansprüche,
dadurch gekennzeichnet,
daß innerhalb der Katalysatorzonen (5) Zuführlanzen (7) für das Oxidationsmittel mit Mikroporen (16), wie Laserbohrungen oder dgl., vorgesehen sind.

16. Vorrichtung nach einem der vorangehenden Ansprüche,
dadurch gekennzeichnet,
daß jede Katalysatorzone (5) getrennt mit der Zufuhr eines Oxidationsmittels beaufschlagbar ist.

17. Vorrichtung nach einem der vorangehenden Ansprüche,
dadurch gekennzeichnet,
daß in den Wärmeaustauscherzonen (6) Schikanen oder dgl. für das durchströmende Gas zu dessen gezielter Strömungsleitung vorgesehen sind.

18. Vorrichtung nach einem der vorangehenden Ansprüche,
dadurch gekennzeichnet,
daß die Zuführrohre (7) für das Oxidationsmittel aus einem porösen keramischen Material oder einem entsprechenden Sonderwerkstoff gefertigt sind.

19. Vorrichtung nach einem der vorangehenden Ansprüche,
dadurch gekennzeichnet,
daß die Wärmeübertragungszonen (6) mit einem Inertmaterial oder einem Dampfreformierungskatalysator zur Wärmeübertragung gefüllt sind.

20. Vorrichtung nach einem der vorangehenden Ansprüche,
dadurch gekennzeichnet,
daß nach dem in Strömungsrichtung letzten katalytischen Segment für eine Teilmenge $O_2$-enthaltenden Gases in den Zuführlanzen (7) eine Öffnung vorgesehen ist.

21. Vorrichtung nach einem der vorangehenden Ansprüche,
dadurch gekennzeichnet,
daß die Zuführrohre (7) für das Oxidationsmittel wenigstens teilweise katalytisch oxidierende Eigenschaften aufweisen, insbesondere eine katalytische Beschichtung auf der Außenhaut tragen.